# EUROPEAN PATENT APPLICATION

(11) **EP 4 675 802 A1**
(43) Date of publication of application: **07.01.2026**
(21) Application number: 24882901.2
(22) Date of filing: 25.10.2024
(51) Int. Cl.: H01M 50/264, H01M 50/211, H01M 50/249

(54) **BATTERY MODULE AND BATTERY PACK AND VEHICLE INCLUDING SAME**

(30) Priority: 25.10.2023 KR 20230143786
(71) Applicant: LG ENERGY SOLUTION, LTD., Seoul 07335 (KR)
(72) Inventor: Chung, Won-Sik, Daejeon 34122 (KR); Kim, Young-Woong, Daejeon 34122 (KR); Mun, Ji-Seon, Daejeon 34122 (KR); Uhm, Jae-Yong, Daejeon 34122 (KR); Cha, In-Seok, Daejeon 34122 (KR); Pyun, So-Young, Daejeon 34122 (KR); Hwang, Jae-Cheol, Daejeon 34122 (KR)
(74) Representative: Plasseraud IP
(86) International application number: PCT/KR2024/016413
(87) International publication number: WO 2025/089875

(57) **Abstract**

The present disclosure relates to a battery module including: a plurality of battery cells; an elastic member coupled to ends of at least some of the plurality of battery cells, and configured to be deformed in shape by external pressure; and a fixing member configured to pressurize the elastic member from the outside.

## Description

### TECHNICAL FIELD

The present disclosure relates to a battery module, and a battery pack and a vehicle including the same.

This application is based on and claims priority from Korean Patent Application No. 10-2023-0143786, filed on October 25, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. A battery module or battery pack may be configured by connecting a plurality of battery cells in series when a high output voltage is required. Alternatively, a battery module or battery pack may be configured by connecting a plurality of battery cells in parallel in order to the charge/discharge capacity. Accordingly, the number of battery cells included in the battery module or pack may be set in various ways depending on the required output voltage and/or charge/discharge capacity.

Meanwhile, when configuring the battery pack by connecting a plurality of battery cells in series/parallel, it is common to preferentially form a battery module including at least one battery cell and then add other components using the at least one battery module, thereby configuring a battery pack or battery rack. Alternatively, a battery pack has recently been manufactured in a cell-to-pack type in which multiple battery cells are directly stored in a pack housing, instead of being modularized.

Meanwhile, if a pouch-type battery cell manufactured by laminating electrodes and separators is repeatedly charged and discharged, a sliding phenomenon may occur in which the laminated electrodes and separators are slide relative to each other at the edge of the battery cell. This reduces the thickness of the battery cell on the edge, so that the thickness between the battery cells becomes uneven in the battery cell stack. This uneven thickness may cause a problem with local deterioration of the battery cell during the charge/discharge cycle of the battery cell.

In order to prevent swelling of the battery cell that occurs during the charge/discharge cycle of the pouch-type battery cell, conventional battery modules are configured such that compression materials such as double-sided tape and PU pads are applied between the battery cells to pressurize the battery cells.

Although the compression materials are able to prevent swelling by pressurizing the battery cells, they also have difficulty in eliminating the thickness difference between the battery cells because they apply different pressures to local locations.

Therefore, there is a need to develop a structure that uniformly pressurizes the battery cells to minimize the thickness difference between the battery cells, thereby extending the expected life span of the battery cells.

### DISCLOSURE

### Technical Problem

The present disclosure is designed to solve the problems of the related art, and therefore the present disclosure is directed to providing a battery module capable of extending the life span of battery cells by minimizing the thickness difference between the battery cells, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a plurality of battery cells; an elastic member coupled to ends of at least some of the plurality of battery cells, and configured to be deformed in shape by external pressure; and a fixing member configured to pressurize the elastic member from the outside.

A plurality of elastic members may be provided, and the plurality of elastic members may be configured to group one or more different battery cells.

The plurality of elastic members may be configured to be in surface contact with each other.

The elastic member may be configured such that the end of the battery cell is inserted thereinto.

The elastic member may include an insertion portion configured such that the ends of the plurality of battery cells are inserted thereinto, and a pressing portion configured to pressurize the ends of the battery cells inserted into the insertion portion.

The insertion portion may be configured to include a portion whose width decreases as it extends toward the outside.

The elastic member may further include an upper pad and a lower pad configured to cover the end of the battery cell at a top and a bottom, respectively, and the insertion portion may be formed by being surrounded by the pressing portions, the upper pad, and the lower pad.

The elastic member may be provided on a side of the battery cell where an electrode lead is located.

The elastic member may have an insertion slit formed such that the electrode lead of the battery cell passes therethrough to the outside.

The fixing member may be configured to wrap the end of the battery cell and at least a portion of the elastic member from the outside.

The fixing member may be configured to pressurize all of the plurality of elastic members.

The fixing member may include a coupling protrusion configured to protrude outward, and the elastic member may include a coupling groove configured to be coupled to the coupling protrusion.

According to another aspect of the present disclosure, there is provided a battery pack including a battery module according to the present disclosure.

In addition, according to another aspect of the present disclosure, there is provided a vehicle including a battery module according to the present disclosure.

### Advantageous Effects

According to one aspect of the present disclosure, the compression member may uniformly pressurize the battery cells to minimize the thickness difference between the battery cells, thereby extending the expected life span of the battery cells. In particular, according to this aspect of the present disclosure, the performance of the battery cell may be maximized.

In addition, according to another aspect of the present disclosure, the process of coupling the battery cells may be simplified. Therefore, according to this aspect of the present disclosure, the cost and time for manufacturing the battery module may be reduced, thereby improving productivity.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery module according to an embodiment of the present disclosure.
FIG. 2 is an exploded perspective view of a battery module according to an embodiment of the present disclosure.
FIG. 3 is an exploded perspective view of some components of a battery module according to an embodiment of the present disclosure.
FIG. 4 is a cross-sectional view of a part a battery module when viewed from the top according to an embodiment of the present disclosure, which may be a cross-sectional view taken along line I - I' in FIG. 1.
FIG. 5 is an enlarged view of part A in FIG. 4.
FIG. 6 is a perspective view of a battery module to which an elastic member is applied according to an embodiment of the present disclosure.
FIG. 7 is a cross-sectional view illustrating a part of a battery module to which an elastic member is applied according to another embodiment of the present disclosure, which may be a cross-sectional view taken along line II - II' in FIG. 1.
FIG. 8 is a perspective view of a battery module to which an elastic member is applied according to another embodiment of the present disclosure.
FIG. 9 is a perspective view of some components of a battery module to which a fixing member is applied according to an embodiment of the present disclosure.
FIG. 10 is a perspective view of some components of a battery module to which a fixing member is applied according to another embodiment of the present disclosure.
FIG. 11 is a perspective view of some components of a battery module to which a fixing member is applied according to another embodiment of the present disclosure.
FIG. 12 is a cross-sectional view of a battery module to which a fixing member and an elastic member are applied according to another embodiment of the present disclosure, which may be a cross-sectional view taken along line III - III' in FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the left-right direction, the Y-axis direction may indicate the front-back direction perpendicular to the X-axis direction on the horizontal plane (X-Y plane), and the Z-axis direction may indicate the up-down direction (vertical direction) perpendicular to both the X-axis direction and the Y-axis direction.

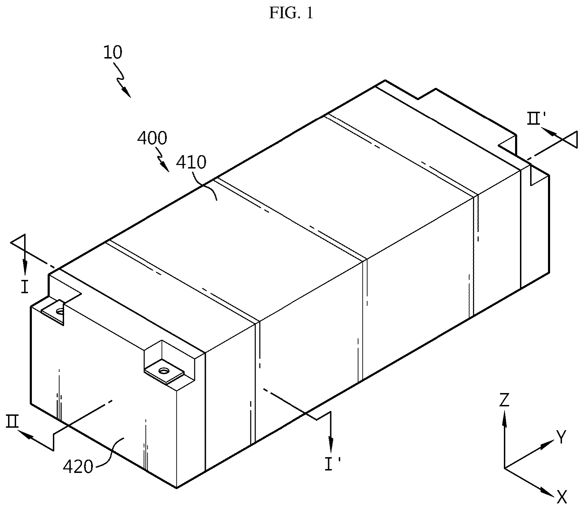

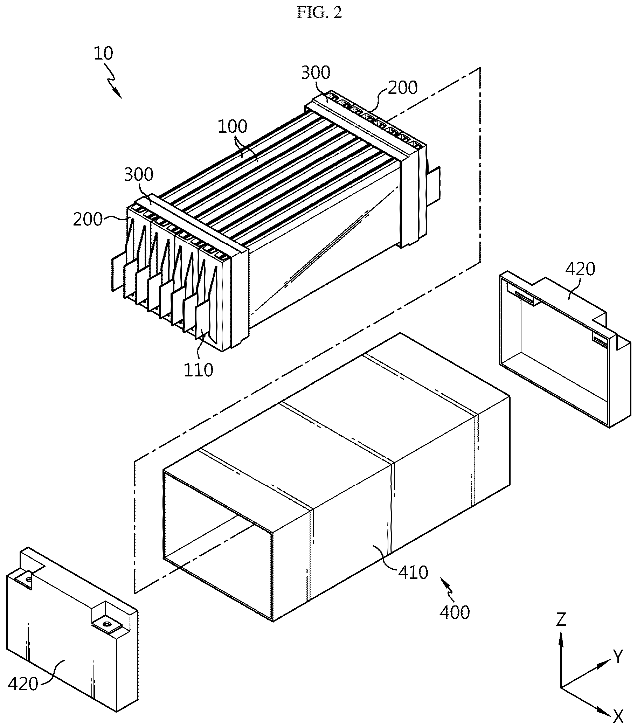

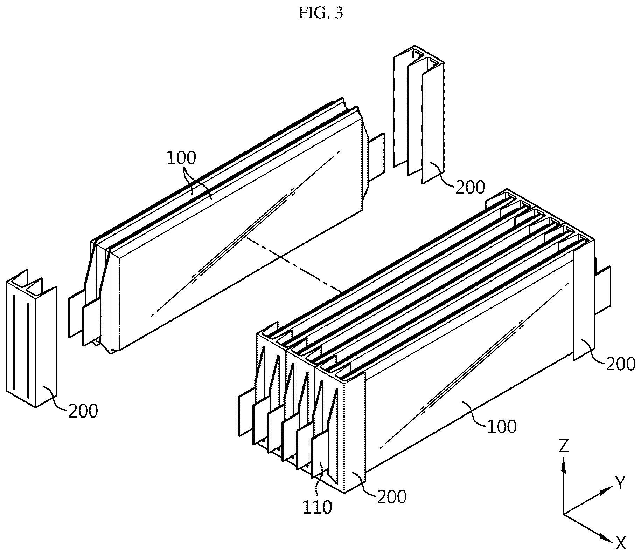

FIG. 1 is a perspective view of a battery module according to an embodiment of the present disclosure, FIG. 2 is an exploded perspective view of a battery module according to an embodiment of the present disclosure, and FIG. 3 is an exploded perspective view of some components of a battery module according to an embodiment of the present disclosure.

Referring to FIGS. 1 to 3, a battery module 10 according to an embodiment of the present disclosure includes a battery cell 100, an elastic member 200, and a fixing member 400.

Referring to FIG. 2, a plurality of battery cells 100 may be included. The battery cell 100 may include an electrode assembly (including a positive electrode plate, a negative electrode plate, and a separator), an electrolyte, and a battery case. The plurality of battery cells 100 may be electrically connected to each other. For example, the plurality of battery cells 100 may be electrically connected to each other in series and/or in parallel through a bus-bar or the like.

The plurality of battery cells 100 may be included in the battery module 10 while being stacked on each other. For example, as illustrated in FIG. 2 or the like, the plurality of battery cells 100 may be arranged in the left-right direction (X-axis direction) while standing in the vertical direction (Z-axis direction). In this case, each battery cell 100 may have a sealing portion facing in the front-back direction (Y-axis direction) and the up-down direction (Z-axis direction), and a storage portion facing in the left-right direction (X-axis direction).

Meanwhile, the present disclosure is not limited to a specific type or shape of battery cell 100, and various battery cells 100 known at the time of filing the present disclosure may be applied to configure the battery module 10 of the present disclosure. In the present embodiment, although a pouch-type secondary battery with high energy density and easy stacking will be described as shown in the drawing, it is obvious that a prismatic secondary battery may be applied to the battery cell 100 of the present disclosure.

Referring to FIG. 3, the elastic member 200 may be coupled to the end of the battery cell 100. The elastic member 200 may be coupled to at least some of the battery cells 100. For example, as illustrated in FIGS. 2 and 3, a plurality of elastic members 200 may be provided at both ends of the battery cells 100 in the front-back direction (Y-axis direction) in the drawing.

The elastic member 200 may be configured to be partially deformed by external pressure. The elastic member 200 may be made of a material having elasticity. For example, the elastic member 200 may be made of a material such as silicone or polyurethane.

Meanwhile, the fixing member 300 may be configured to pressurize the elastic member 200 from the outside. The fixing member 300 may be configured to pressurize the outer side of the elastic member 200. The fixing member 300 may be configured to uniformly pressurize the elastic member 200. The fixing member 300 may be made of a material having no or little elasticity. For example, the fixing member 300 may be configured as a strap made of a metal material or tape having an adhesive surface on at least one side.

Accordingly, the elastic member 200 may be deformed in shape corresponding to the shape of the battery cell 100 by the pressure applied from the fixing member 300. In particular, the elastic member 200 may be configured to be partially deformed in thickness at a portion where the thickness of the battery cell 100 is reduced. As a result, the elastic member 200 may uniformly pressurize the battery cells 100 coupled to the elastic member 200.

That is, according to the above-described embodiment of the present disclosure, the fixing member 300 may be configured to pressurize the elastic member 200 so that the elastic member 200 compensates for the thickness difference of the battery cells 100. Therefore, according to the above-implemented configuration, local deterioration of the battery cell 100 may be prevented during the charge/discharge cycle, thereby extending the expected life span of the battery cell 100 and maximizing the performance of the battery cell 100.

In addition, according to the above-implemented configuration of the present disclosure, the elastic member 200 and the fixing member 300 fix the battery cell 100 on both sides, contributing to the structural rigidity of the battery cells 100.

In addition, when the battery module 10 is ignited internally, the elastic member 200 may perform a function of blocking heat such as flames generated from the ignited battery cell 100 from moving in the stacking direction of the battery cells 100 or the lengthwise direction of the battery cell 100. Accordingly, heat propagation to neighboring battery cells 100 may be minimized.

Meanwhile, referring to FIGS. 1 and 2, the battery module 10 according to an embodiment of the present disclosure may further include a module case 400. The module case 400 may have an inner space formed to accommodate the battery cells 100, the elastic member 200, and the fixing member 300 therein. The module case 400 of the present embodiment may include a case body 410 and end plates 420 disposed on the front and rear sides of the case body 410.

Here, the case body 410 may have an upper plate, a lower plate, a left plate, and a right plate to form a storage space, and a stack of battery cells 100 may be stored in the storage space. The case body 410 may be made of a metal material having rigidity and heat resistance to physically or chemically protect the stored battery cells 100.

In addition, the end plate 420 may be coupled to the case body 410 so as to cover the opening of the case body 410. More specifically, the case body 410 may have front and rear openings, and the end plates 420 may be configured to be coupled to the front and rear openings of the case body 410.

Meanwhile, although not shown in the drawing, the case body 410 may be provided with a venting hole, thereby enabling directional venting in one direction. For example, a plurality of venting holes may be formed on the upper surface of the case body, so that directional venting toward the upper portion of the battery module 10 may be possible through the venting holes.

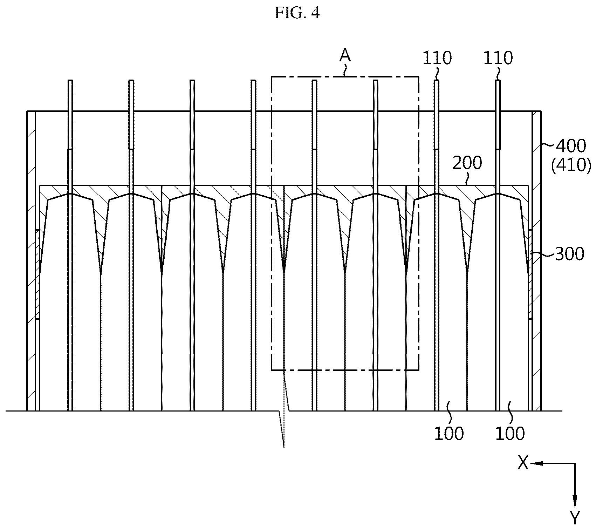

FIG. 4 is a cross-sectional view of a part a battery module when viewed from the top according to an embodiment of the present disclosure, which may be a cross-sectional view taken along line I - I' in FIG. 1.

Referring to FIG. 4, a plurality of elastic members 200 may be provided in one battery module 10. In this case, one elastic member 200 may be provided to be coupled to at least some of the plurality of battery cells 100. For example, one elastic member 200 may be configured to be coupled to all of the plurality of battery cells 100.

Alternatively, the plurality of elastic members 200 may be configured to group one or more different battery cells 100. Accordingly, the elastic member 200 may be configured to divide the plurality of battery cells 100 into a plurality of groups. For example, as illustrated in FIG. 3, a plurality of elastic members 200 may be provided such that each elastic member 200 is coupled to two adjacent battery cells 100. Unlike the above embodiment, the number of battery cells 100 to which the elastic member 200 is coupled may vary. In addition, unlike the above embodiment, the elastic member 200 may be coupled to only some of the plurality of battery cells 100.

According to the above embodiment, the number of battery cells 100 coupled to the elastic member 200 or the shape of the elastic member 200 may be configured to vary among the plurality of elastic members 200. In addition, the elastic coefficient of the elastic member 200 may vary among the plurality of elastic members 200. For example, the elastic member 200 provided in the central battery cells 100 of the stack may be less pressurized by the fixing member 300 than the elastic member 200 provided on the outer battery cells 100 of the stack. Accordingly, the elastic coefficient of the elastic member 200 provided in the central battery cells 100 of the stack may be set smaller to facilitate shape deformation.

In addition, a plurality of elastic members 200 may be configured to be in surface contact with each other. That is, the plurality of elastic members 200 may be configured to press against each other between adjacent elastic members 200. The width of the elastic member 200 may be configured to correspond to the thickness of the battery cells 100 to which the elastic member 200 is coupled.

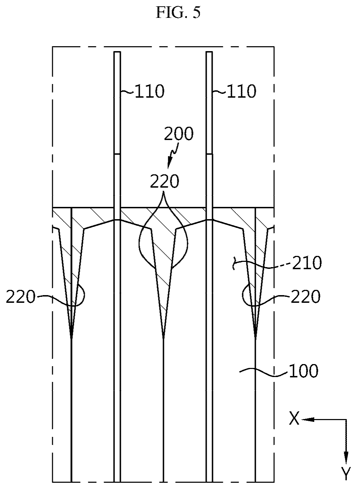

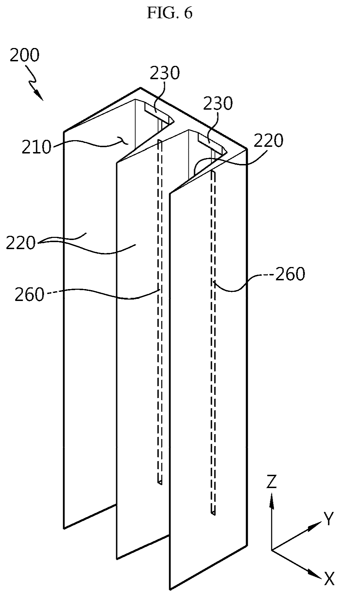

FIG. 5 is an enlarged view of part A in FIG. 4, and FIG. 6 is a perspective view of a battery module to which an elastic member is applied according to an embodiment of the present disclosure.

Referring to FIG. 5, the elastic member 200 may be configured such that the end of the battery cell 100 is inserted thereinto. The thickness reduction of the battery cell 100 caused by sliding of the electrodes and separators may usually occur at the end of the battery cell 100. Here, the end of the elastic member 200 may indicate the end of the elastic member 200 in the height direction or lengthwise direction. According to the above-implemented configuration of the present disclosure, the thickness reduction occurring at the end of the battery cell 100 may be compensated for by the configuration in which the end of the battery cell 100 is inserted into the elastic member 200.

Specifically, referring to FIG. 6, the elastic member 200 may include an insertion portion 210 and a pressing portion 220. The insertion portion 210 may be configured such that the ends of a plurality of battery cells 100 may be inserted thereinto. In addition, the pressing portion 220 may be configured to pressurize the ends of the battery cells 100 inserted into the insertion portion 210. The width of the pressing portion 220 may be configured to compensate for the thickness reduction of the end of the battery cell 100 inserted into the insertion portion 210.

Therefore, when the fixing member 300 pressurizes the elastic member 200 from the outside, the pressing portion 220 may be configured to pressurize the ends of the battery cells 100 inserted into the insertion portion 210. In this case, the insertion portion 210 may be deformed in shape to correspond to the thickness of the end of the battery cell 100. According to the above-implemented configuration of the present disclosure, it is possible to uniformly pressurize the end of the battery cell 100, thereby more effectively alleviating the thickness difference between the battery cells 100.

A plurality of pressing portions 220 having the above configuration may be provided. The pressing portions 220 may be provided between adjacent battery cells 100 and on one side of the battery cell 100. In addition, the elastic member 200 may further include a connecting portion 230 configured to connect adjacent pressing portions 220 to each other.

In addition, the pressing portion 220 may be configured to extend in the height direction (Z-axis direction) of the elastic member 200. According to the above-implemented configuration of the present disclosure, the thickness reduction of the battery cell 100 may also be compensated for in the height direction of the battery cell 100.

Meanwhile, the insertion portion 210 may be configured such that its width decreases as it extends outward. That is, the width of the insertion portion 210 may be configured to decrease as it extends outward in the elastic member 200. According to the above-implemented configuration of the present disclosure, the shape of the insertion portion 210 may be configured to match the thickness or shape of the battery cell 100 whose thickness is reduced at the end. Accordingly, if the end of the battery cell 100 is inserted into the insertion portion 210, it may come into closer contact with and pressed by the pressing portion 220.

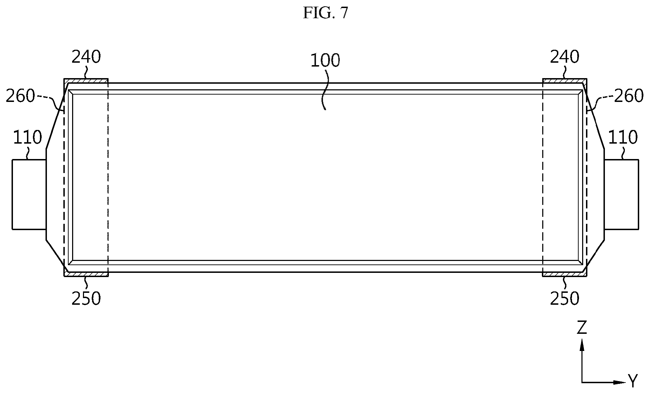

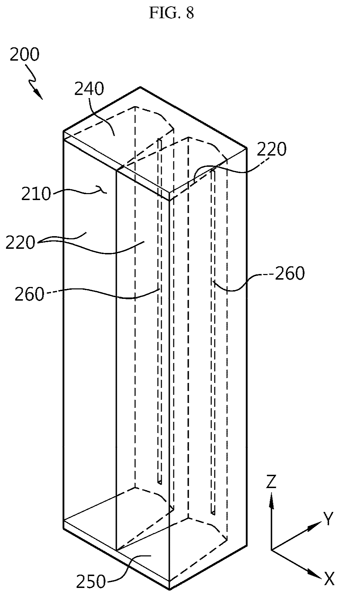

FIG. 7 is a cross-sectional view illustrating a part of a battery module to which an elastic member is applied according to another embodiment of the present disclosure, which may be a cross-sectional view taken along line II - II' in FIG. 1. In addition, FIG. 8 is a perspective view of a battery module to which an elastic member is applied according to another embodiment of the present disclosure.

The elastic member 200 may further include an upper pad 240 and a lower pad 250. The upper pad 240 and the lower pad 250 may be configured to cover the end of the battery cell 100 at the top and bottom, respectively. The upper pad 240 and the lower pad 250 may be configured to pressurize the end of the battery cell 100 from the top and bottom, respectively. In this case, the insertion portion 210 may be formed by being surrounded by the pressing portions 220, the upper pad 240, and the lower pad 250. In addition, the gap between the upper pad 240 and the lower pad 250, that is, the height of the insertion portion 210, may be configured to correspond to the height of the end of the battery cell 100.

Accordingly, the end of the battery cell 100 may be completely inserted into the insertion portion 210, and the end of the battery cell 100 inserted into the insertion portion 210 may be pressurized and fixed by the upper pad 240 and the lower pad 250, as well as the pressing portions 220. According to the above-implemented configuration of the present disclosure, when the elastic member 200 is pressurized by the fixing member 300 on both sides, the battery cells 100 may be prevented from being separated upward and downward.

Meanwhile, referring to FIGS. 5 to 8, each of the plurality of battery cells 100 may include an electrode lead 110. The electrode terminal 110 may be connected to the electrode assembly and configured to extend to the outside of the battery case.

A pair of electrode terminals 110 may be provided, and the pair of electrode terminals 110 may extend from both ends of the battery cell 100, that is, in the lengthwise direction (±Y direction). In this case, the pair of electrode terminals 110 may be a positive electrode lead and a negative electrode lead, respectively. If necessary, the battery cell 100 may be configured such that two electrode terminals 110 are located only at one end of the battery cell in the Y-axis direction, for example, in the +Y-axis direction.

In this case, the elastic member 200 may be provided on the side of the battery cell 100 where the electrode lead 110 is located. According to the above-implemented configuration of the present disclosure, it is possible to effectively prevent the phenomenon in which the electrodes and separators inside the electrode assembly slide relative to each other on the side where the electrode lead 110 is located. Therefore, the thickness reduction of the battery cell 100 on the side where the electrode lead 110 is located may be compensated for, thereby effectively preventing the thickness unevenness of the battery cells 100.

In addition, the elastic member 200 may have an insertion slit 260 configured to allow the electrode lead 110 of the battery cell 100 to pass therethrough to the outside. Accordingly, the electrode lead 110 may extend to the outside of the elastic member 200 through the insertion slit 260 and may be coupled to the bus-bar frame assembly (not shown) provided on the outside of the elastic member 200.

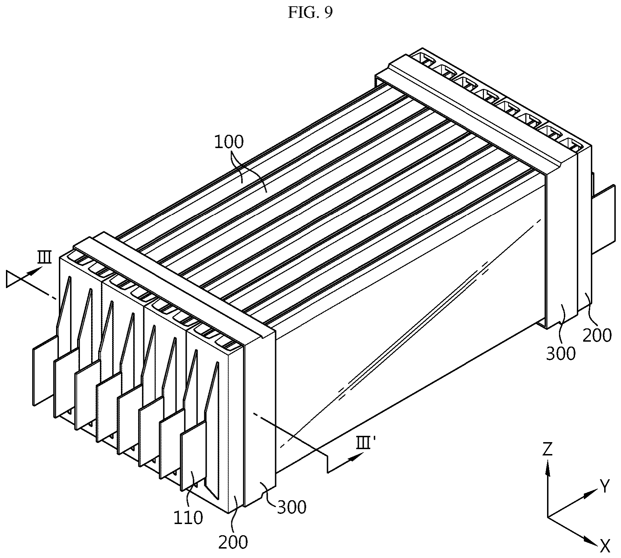

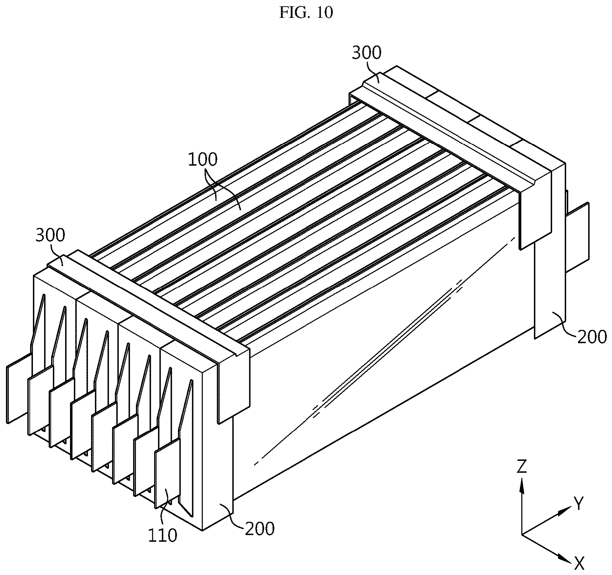

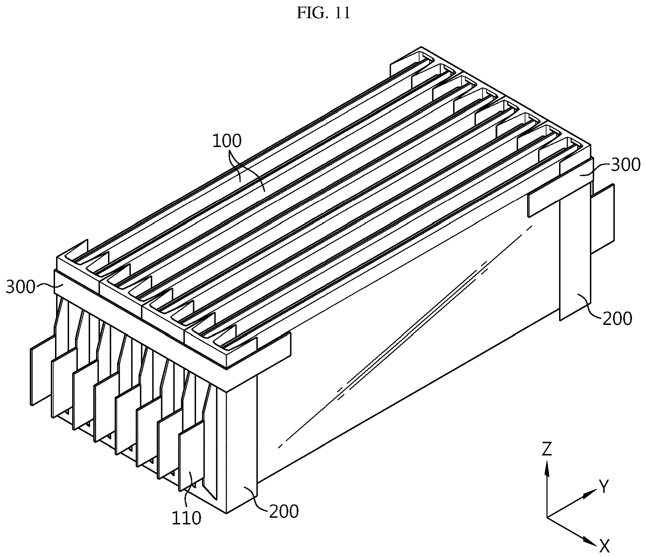

FIG. 9 is a perspective view of some components of a battery module to which a fixing member is applied according to an embodiment of the present disclosure, FIG. 10 is a perspective view of some components of a battery module to which a fixing member is applied according to another embodiment of the present disclosure, and FIG. 11 is a perspective view of some components of a battery module to which a fixing member is applied according to another embodiment of the present disclosure.

The fixing member 300 may be configured to wrap around the ends of the battery cells 100 and at least a portion of the elastic member 200 from the outside. That is, the ends of the battery cells 100 may be inserted into the elastic member 200, and the fixing member 300 may pressurize and fix the elastic member 200 from the outside.

The fixing member 300 may be configured to pressurize at least some of the plurality of elastic members 200. For example, a plurality of fixing members 300 may be provided such that each is provided for each of the plurality of elastic members 200.

Alternatively, the fixing member 300 may be configured to pressurize all of the plurality of elastic members 200. That is, one fixing member 300 may be configured to wrap all of the plurality of elastic members 200 that are arranged side by side. According to the above-implemented configuration, an adhesive material such as tape for coupling adjacent battery cells 100 may be omitted. Accordingly, since the process for coupling the battery cells 100 may be simplified, the cost and time for manufacturing a battery module may be reduced, thereby improving productivity.

For example, as illustrated in FIG. 9, one fixing member 300 may be configured to pressurize the outermost perimeter of multiple elastic members 200. In this case, the fixing member 300 may be configured to pressurize all surfaces of the multiple elastic members 200. According to the above-implemented configuration, the elastic members 200 may be pressurized from the top, bottom, and both sides, thereby stably maintaining the stack of multiple battery cells 100. Accordingly, the structural rigidity of the battery cells 100 may be further improved.

Alternatively, as illustrated in FIG. 10, the fixing member 300 may be configured to pressurize a plurality of elastic members 200 from the top. In this case, the fixing member 300 may be configured to pressurize the upper surface and both sides of the plurality of elastic members 200. Here, the fixing member 300 may be made of a material having little elasticity, such as a metal strap. According to the above-implemented configuration, after the ends of the battery cells 100 are inserted into the elastic member 200, the fixing member 300 may be simply fixed to the top of the elastic member 200, thereby simplifying the process of manufacturing the battery module 10.

Alternatively, as illustrated in FIG. 11, the fixing member 300 may be configured to pressurize a plurality of elastic members 200 from the front and rear. In this case, the fixing member 300 may be configured to pressurize the outer surface and both sides of the plurality of elastic members 200. Here, the fixing member 300 may be made of a material having little elasticity, such as a metal strap. According to the above-implemented configuration, after the end of the battery cell 100 is inserted into the elastic member 200, the fixing member 300 may be fixed to the front and rear surfaces of the elastic member 200, so the process for manufacturing the battery module 10 may be simplified.

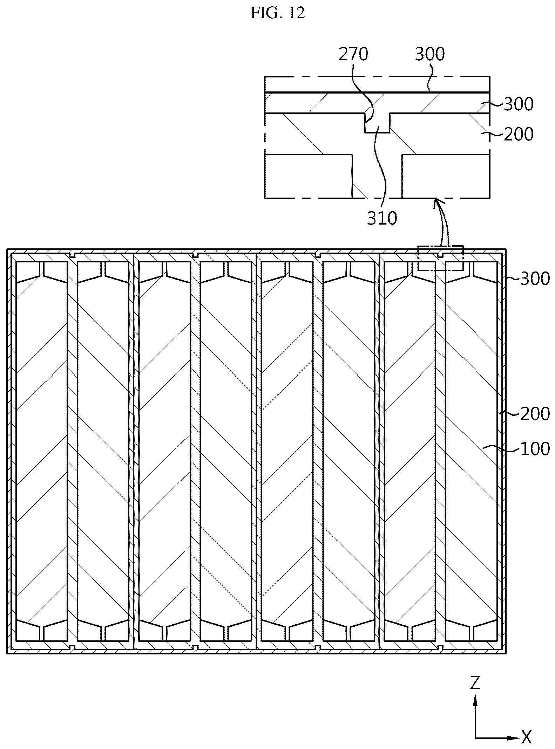

FIG. 12 is a cross-sectional view of a battery module to which a fixing member and an elastic member are applied according to another embodiment of the present disclosure, which may be a cross-sectional view taken along line III - III' in FIG. 9.

Referring to FIG. 12, the battery module 10 according to another embodiment of the present disclosure may include a coupling configuration between the fixing member 300 and the elastic member 200. Specifically, the fixing member 300 may include a coupling protrusion 310 configured to protrude outward, and the elastic member 200 may include a coupling groove 270 configured to be coupled with the coupling protrusion 310. Accordingly, the coupling protrusion 310 may be inserted into the coupling groove 270 and prevented from moving in the forward, backward, left, and right directions.

According to the above-implemented configuration of the present disclosure, the bonding force between the fixing member 300 and the elastic member 200 may be improved. In particular, when the fixing member 300 pressurizes the elastic member 200, the fixing member 300 may be prevented from being pushed or moved. As a result, the fixing member 300 may provide a pressing force to uniformly pressurize the end of the battery cell 100 coupled to the elastic member 200.

A battery pack according to an embodiment of the present disclosure may include one or more battery modules 10 according to an embodiment of the present disclosure described above. The battery pack according to the present disclosure may further include components of the battery pack known at the time of filing the present disclosure, such as a BMS (Battery Management System) for integrated control of charging and discharging of one or more battery modules, a current sensor, a fuse, or the like.

In addition, the battery pack according to the present disclosure may have the module case 400 described above. In this case, the components of the battery pack, such as a BMS, a bus-bar, and a relay may be provided inside the module case 400. This configuration is also called a cell-to-pack type in which the battery cells 100 are directly stored in the pack case.

A vehicle according to an embodiment of the present disclosure may include one or more battery packs according to an embodiment of the present disclosure or battery modules according to an embodiment of the present disclosure. The vehicle according to the present disclosure may be, for example, an electric vehicle, a hybrid vehicle, or a plug-in hybrid vehicle. The vehicle includes a four-wheel vehicle and a two-wheel vehicle. The above vehicle operates by power provided from a battery pack or battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a plurality of battery cells;
an elastic member coupled to ends of at least some of the plurality of battery cells, and configured to be deformed in shape by external pressure; and
a fixing member configured to pressurize the elastic member from the outside.

2. The battery module according to claim 1,
wherein a plurality of elastic members are provided, and
wherein the plurality of elastic members are configured to group one or more different battery cells.

3. The battery module according to claim 2,
wherein the plurality of elastic members are configured to be in surface contact with each other.

4. The battery module according to claim 1,
wherein the elastic member is configured such that the end of the battery cell is inserted thereinto.

5. The battery module according to claim 4,
wherein the elastic member comprises
an insertion portion configured such that the ends of the plurality of battery cells are inserted thereinto, and
a pressing portion configured to pressurize the ends of the battery cells inserted into the insertion portion.

6. The battery module according to claim 5,
wherein the insertion portion is configured to include a portion whose width decreases as it extends toward the outside.

7. The battery module according to claim 5,
wherein the elastic member further comprises an upper pad and a lower pad configured to cover the end of the battery cell at a top and a bottom, respectively, and
wherein the insertion portion is formed by being surrounded by the pressing portions, the upper pad, and the lower pad.

8. The battery module according to claim 1,
wherein the elastic member is provided on a side of the battery cell where an electrode lead is located.

9. The battery module according to claim 8,
wherein the elastic member has an insertion slit formed such that the electrode lead of the battery cell passes therethrough to the outside.

10. The battery module according to claim 1,
wherein the fixing member is configured to wrap the end of the battery cell and at least a portion of the elastic member from the outside.

11. The battery module according to claim 2,
wherein the fixing member is configured to pressurize all of the plurality of elastic members.

12. The battery module according to claim 1,
wherein the fixing member comprises a coupling protrusion configured to protrude outward, and
wherein the elastic member comprises a coupling groove configured to be coupled to the coupling protrusion.

13. A battery pack comprising a battery module according to claims 1 to 12.

14. A vehicle comprising a battery module according to claims 1 to 12.
